# EUROPEAN PATENT SPECIFICATION

(11) **EP 3 772 434 B1**
(45) Date of publication and mention of the grant of the patent: **02.06.2021**
(21) Application number: 20166961.1
(22) Date of filing: 31.03.2020
(51) Int. Cl.: B60R 9/06, B60D 1/06

(54) **REAR LOAD CARRIER**
HECKLASTTRÄGER
SUPPORT DE CHARGE ARRIÈRE

(30) Priority: 05.08.2019 CN 201910716091; 20.08.2019 EP 19192696
(43) Date of publication of application: 10.02.2021
(73) Proprietor: Carman Enterprise Co., Ltd., Hangzhou 311121 (CN)
(72) Inventor: Li, Xianwei, Hangzhou (CN)
(74) Representative: Paul & Albrecht Patentanwälte PartG mbB

(56) References cited:
- EP-A1- 2 987 681
- EP-A1- 3 466 766
- DE-A1-102004 030 082
- DE-B3-102007 026 375

## Description

The present invention relates to a rear load carrier for mounting on a motor vehicle with a carrier frame which has a connection device for attachment to a trailer hitch on the vehicle side, the connection device comprising a basic body, an upper and a lower clamping element, which are arranged one above the other, form between them a receptacle for a connection head of the trailer hitch and are displaceable relative to one another, and an actuating device which is coupled to the clamping elements in order to displace them relative to one another between an insertion position, in which the clamping elements are moved apart in such a way that the connection device can be placed on or removed from the connection head, and a holding position, in which the clamping elements embrace a connection head which is located in the receptacle in a fixed manner, wherein the connection device further comprises a guiding element for receiving and guiding the upper clamping element, the guiding element being coupled to the actuating device such that it can be displaced towards or away from the lower clamping element, in particular vertically, and wherein spring means are provided between the upper clamping element and the guiding element in order to mount the upper clamping element such that it can be displaced resiliently relative to the guiding element against the restoring force of the spring means.

Rear load carriers for rear mounting on a motor vehicle such as an automobile are often used to transport bicycles. Usually, such a load carrier comprises a carrier frame to which, for example, profile rails for receiving the wheels of bicycles are attached or can be attached, and at its front end a connection device by means of which the load carrier can be frictionally attached to the connection head of a conventional trailer hitch.

A connection device for such a load carrier is known from DE 2007 026 375 B3. This device comprises a basic body connected to a carrier frame, on which an upper clamping element is fixed. The upper clamping element is designed for contact at the top of the spherical section of the connection head of a trailer hitch. The rear load carrier known further comprises a lower clamping element which has a recess open towards its front side to put the connection device on the connection head of a trailer hitch. The lower clamping element made of an extruded section piece is movably arranged via an actuating device between an insertion position, in which it is so far away from the upper clamping element that the connecting device can be placed on or removed from the connection head, and a holding position, in which the clamping elements engage around the connection head in a fixed manner. The actuating device comprises a lever which is pivoted on the basic body. On the actuating lever, two spring elements opposite each other on both sides of the basic body are mounted with their upper end section eccentrically to the swivel axis of the actuating lever. These have a C-shaped basic shape and are connected at their lower end to the lower clamping element. The spring force generated by the spring elements makes it possible to clamp the two clamping elements in their holding position against the connection head located in the receptacle.

EP 2 987 681 A1 discloses a load carrier with an operating mechanism, according to the preamble of claim 1. The carrier comprises a carrier frame having a connection device for fastening to a trailer hitch of vehicle. The connection device comprises a basic body and an upper clamping element fixed to the basic body. Several lower clamping elements are arranged below the upper clamping element forming a receptacle for a connection head. The lower clamping elements are displaceable relative to the upper clamping element between an insertion position and a holding position. In the insertion position, the connection device can be placed on or removed from the connection head, whereas, in the holding position, the clamping elements embrace the connection head in a fixing manner.

The connection device further comprises an actuating device which is coupled to the clamping elements in order to displace them relative to one another. Furthermore, the connection device comprises a guiding element which is vertically displaceable inside the basic body. The guiding element is coupled to the actuating device in order to be displaced vertically. The guiding element guides the upper clamping element which comprises legs that are arranged inside corresponding nuts formed in the guiding element. Two disk springs are arranged between the actuating device and the basic body so that the guiding element can be displaced resiliently relative to the upper clamping element via the actuating device and force transmitting elements. Accordingly, spring means are provided kinetically between the upper clamping element and the guiding element.

Even though a rear load carrier with such a connection device has proved itself in practice, it is still considered disadvantageous that the mechanism of the actuating device is relatively complicated. Several force deflections take place between the lower clamping element and the basic body via the actuating lever. Furthermore, it can be difficult to apply a defined clamping force by the rotational movement of the spring elements around the pivot axis of the lever. Moreover, it can also be seen as to be disadvantageous, that the C-shape spring elements are located outside the basic body and can be damaged by external mechanical influences. In case that the C-shaped spring elements break, the load carrier loosens from the trailer hitch completely as the lower clamping element is only connected to the basic body via the spring elements.

The task of the present invention is therefore to provide a rear load carrier with an alternative connection device, which in particular avoids the aforementioned disadvantages and enables a safe and fast attachment to a trailer hitch of a motor vehicle.

This task is solved in a rear load carrier of the type mentioned above in that the spring means support against a contact face of the guiding element and against a contact face of the upper clamping element.

In other words, the guiding element is coupled to the actuating device and receives and guides the upper clamping element. By means of spring means being provided between the upper clamping element and the guiding element, the upper clamping element can be moved relative to the guiding element against the restoring force of the spring means. To attach the rear-load carrier to the connection head of a trailer hitch, the upper clamping element is brought into its insertion position by moving the guiding element away from the lower clamping element. Thus, the rear load carrier can be positioned on the vehicle-side connection head in such a way that the connection head is arranged between the two clamping elements. Due to the weight of the rear-load carrier, the upper clamping element is from the beginning in contact with the upper side of the connection head. Then, the guiding element can be moved towards the lower clamping element, so that the load carrier and the lower clamping element fixed thereto is lifted until it comes into contact with the connection head of the trailer hitch. Further movement of the guiding element towards the lower clamping element leads to an elastic deformation of the spring means and thereby creates a pressure force between the guiding element and the upper clamping element. This force serves to clamp the connection head between the two clamping elements.

Thus, in accordance with the invention, the upper clamping element is pressed downwards by the restoring force of the spring means during the clamping process. In this way, simple kinematics can be achieved without multiple force deflection.

The resilient bearing of the upper clamping element relative to the guiding element by use of spring means allows the connection device to be adapted to connection heads of different sizes. Commonly connection heads of trailer hitches are subjected to wear which means that the diameter of the spherical section can vary. Such a resilient bearing of the upper clamping elements allows the connection device to be adapted to such connection heads of different sizes automatically, without the need to adjust the relative position of both clamping elements by hand.

According for the invention, the spring means support against a contact face, in particular a lower contact face, of the guiding element and against a contact face, in particular an upper contact face, of the upper clamping element. Accordingly, the contact face of the guiding element and the contact face of the upper clamping element are facing each other. In particular, the guiding element may be positioned vertically above the upper clamping element so that the spring means exert a spring force in vertical direction against these two elements.

The guiding element is preferably mounted slidingly in a vertical bore formed in the basic body. Such a translational plain bearing represents a simple manufacturing possibility to realize a mobility of the guiding element relative to the basic body with a low frictional resistance. The inner surface of the vertical bore and/or the outer surface of the guiding element can be provided with a friction-reducing coating, as it is known from commercially available plain bearings, for example. In the same way, the upper clamping element can be mounted slidingly in a vertical bore formed in the guiding element.

According to a preferred embodiment of the invention, the connection device further comprises mechanical stop means, by means of which the mobility of the upper clamping element relative to the guiding element is limited and by means of which the upper clamping element can be preloaded against the restoring force of the spring means. Such stop means avoid an unintentional loosening of the upper clamping element. Furthermore, a preloading of the spring means makes sense as in this way the clamping force applied to the connection head appears directly after the upper clamping element and the lower clamping element come into contact with the connection head.

Preferably, the mechanical stop means comprise a screw, in particular a hexagon socket screw, which is screwed into the guiding element against the restoring force of the spring means and permeates through the upper clamping element so that the upper clamping element can be preloaded adjustably against the restoring force of the spring means. A screw forms an easy solution to adjust the preloading of the spring means, as a rotational movement of the screw is converted into a translational movement and in consequence a compression or a movement apart of the spring means. A hexagon socket screw is in particular advantageous as it allows using standard tools for the adjustment of the preload of the spring means.

In a manner known per se, the screw head can be in contact with a corresponding abutment surface of the upper clamping element.

According to a preferred embodiment of the invention, the spring means comprise at least one disk spring. Such disk springs are commonly characterized by a relatively high spring rate which means that a high force is generated by a relatively small compression of the disk springs. Preferably, the spring means comprise a plurality of disk springs, in particular exactly four disk springs, which may be arranged as a column one upon the other. An arrangement as a column means that the disk springs lay one above the other, wherein the orientation of respective adjacent disk springs is opposed. However, it is also possible to provide groups of disk springs wherein the adjacent disc springs have the same orientation but the different groups have different orientations, so that the spring rate can be chosen flexibly by a particular combination of the orientation of the disk springs.

Generally, the use of disk springs is advantageous due to their high spring rate, as even if the diameter of this spherical section of a connection head varies, they are still capable to create enough clamping force in particular if they are preloaded. In other words, a diameter of this spherical section of the connection head being slightly smaller does not reduce the clamping force created by the preloaded disk springs significantly so that a safe clamping is still ensured.

According to a preferred embodiment of the invention, such a column of disk springs supports against a lower contact face of the guiding element and against an upper contact face of the upper clamping element. This means, that the disk springs arranged at the ends of the column of disk springs are in direct contact with the guiding element and the upper clamping element, respectively.

Preferably, the disk springs are located inside the basic body and are guided and/or centered by the upper clamping element and/or by the guiding element. A guiding projection may protrude from the upper contact face of the upper clamping element or from the lower contact face of the guiding element in order to engage the inner openings of the disk springs and to avoid an unintended displacement of the disk springs. Accordingly, the disc springs are guided by the vertical bore formed in the basic body to the outside and by the guiding projection to the inside. In consequence, even if disk springs break or are submitted to a plastic deformation and their restoring force is reduced, the upper clamping element and the lower clamping element still engage around the connection head in such a way that even if the clamping force is reduced, the load carrier cannot be disconnected completely from the trailer hitch when not intended.

The guiding projection protruding from the upper contact face of the upper clamping element or from the lower contact face of the guiding element may engage into a deepening of the opposite element, i.e. the guiding element/ the upper clamping element in order to align the guiding element and the upper clamping element relative to each other. In such a way, a further centering of the guiding element relative to the upper clamping element is realized and, consequently, an unintended canting of the upper clamping element relative to the guiding element can be avoided.

In a further configuration of the invention, the upper clamping element has a lay-on surface which is designed to come into contact with the spherical section of a connection head of a trailer hitch, in particular with the upper half of the spherical section. In concrete terms, the lay-on surface may have a contour corresponding to the spherical section of a connection head. A defined surface pressure is applied by such a lay-on surface, which preferably has a contour corresponding to a section of a ball surface, when the clamping elements are clamped against the connection head. The surface pressure is in an area in which permanent deformation of both the connection head and the upper clamping element is avoided, but at the same time a sufficiently high clamping force is applied in order to fix the rear load carrier frictionally and thus prevent twisting.

The lay-on surface can be of annular design. This design is based on the consideration that, when the connection device is placed on the connection head, the rear load carrier is simultaneously clearly positioned relative to the connection head when the annular lay-on surface and the spherical section of the connection head are arranged concentrically to each other.

According to a preferred embodiment of the invention, the lower clamping element is fixedly connected to the basic body, in particular screwed to or pinned to the basic body. Such a fixed connection allows a direct transmission of the clamping force from the lower clamping element to the basic body and can be easily manufactured. Alternatively, it is also conceivable that the lower clamping element and the basic body are formed in a one-piece design and not as two separated pieces. For example the basic body could be formed such that the metal sheet is bent in such a way that the shape of the lower clamping element is formed at the bottom of the basic body.

The lower clamping element preferably has a recess, which passes through it in the vertical direction, for receiving the connection head of a trailer hitch. Since the spherical section must be gripped at the bottom to clamp the clamping elements against the connection head, a recess must be made through the lower clamping element in the vertical direction.

In a preferred elaboration, the recess is open towards the front side of the lower clamping element in order to be able to place the connection device on the connection head of a trailer hitch, in particular by means of a horizontal relative movement. Thus the connection device can be positioned on the connection head of a trailer hitch by a simple translational movement when the rear load carrier is to be mounted.

It is useful for the recess formed in the lower clamping element to have, in its rear end region, a contact surface which is designed to come into contact with the spherical section of the connection head and/or with the neck of a trailer hitch adjoining the spherical section on its bottom side. Such a contact surface is necessary, on the one hand, to clamp the two clamping elements against a connection head located in the receptacle, whereby a friction force is exerted which counteracts unintentional rotation of the rear load carrier about the vertical axis. On the other hand, the contact surface also has a supporting function as it supports the weight of the rear load carrier and the loads attached to it against the trailer hitch. It is necessary that the contact surface is formed in the end area of the recess facing away from the front, since the weight forces act in an area behind the connection head.

Specifically, the contact surface may have a region corresponding to the spherical section of the connection head of a trailer hitch. By means of such a region, which in particular is formed as the contour of a partial segment of a ball surface, the contact surface comes into flat contact with the ball-shaped section of a connection head, which has the consequence that a defined surface pressure is applied when the clamping elements are clamped. On the one hand, this generates sufficient frictional force and, on the other hand, it is so low that no plastic deformation of both the connection head and the lower clamping element occurs.

The contact surface may also have a region corresponding to the neck of a trailer hitch. Such a region may, in particular, have a contour formed as a partial segment of a shell of a circular cylinder and provides for a flat contact of the contact surface with the neck of a trailer hitch connected at the bottom to the spherical section.

Furthermore, the actuating device can have an actuating lever which is pivotably mounted on the basic body and is connected to the guiding element via an intermediate lever in such a way that a pivoting movement of the actuating lever is converted into a translational movement of the guiding element in a vertical direction. The arrangement consisting of the actuating lever pivotally mounted on the basic body, an intermediate lever and the vertically translationally movable upper clamping element has the kinematics of a crank mechanism, in which a pivoting movement of the actuating lever is converted into a translational movement of the guiding element. As a result, after the upper clamping element has been placed on the connection head of a trailer hitch, the guiding element can be moved vertically relative to the basic body by means of a pivoting movement of the actuating lever. At the same time, the design of the upper clamping element positions the connection device in a defined manner on the connection head of a trailer hitch.

The actuating lever and the intermediate lever are preferably formed as a toggle lever mechanism. Such a toggle lever mechanism has the advantage that a high force can be applied to the guiding element and the upper clamping element due to the kinematic arrangement.

In a preferred elaboration of this embodiment, the actuating lever is mounted on a projection projecting upwards from the basic body. The actuating lever preferably comprises a long lever arm for manual operation and a short lever arm for articulated connection with the intermediate lever, starting from its pivot axis on the basic body. The long lever arm and the short lever arm of the operating lever may preferably include an angle of at least 70°, in particular of at least 80°, and of at most 110°, in particular of at most 100°, an angle of 90°. Such a design of the actuating lever allows the friction force required to hold the rear load carrier to a trailer hitch on the vehicle side to be applied manually.

The intermediate lever is preferably connected hingedly to the guiding element. Such a hingedly connection can, for example, be realized via an articulated pin, around which both the intermediate lever and the guiding element are pivotally mounted. The swiveling connection between the actuating lever and the basic body, as well as between the actuating lever and the intermediate lever can also be realized in the same way. A simple design of the actuating device is ensured in particular by the fact that the various swivel axes are aligned parallel to each other.

Preferably, the effective length of the intermediate lever and the effective length of the short lever arm of the actuating lever are in a ratio between 0.8 and 1.5. Such a ratio of the two effective lengths enables a compact design on the one hand and efficient force transmission between the actuating lever and the guiding element on the other.

In a further configuration of this embodiment, the actuating device further comprises a securing mechanism which is designed in such a way that the actuating lever is locked in its position corresponding to the holding position of the clamping elements. This design is based on the consideration that unintentional movement of the control lever should be avoided if the rear load carrier is attached to a trailer hitch of a motor vehicle.

The securing mechanism is preferably designed as a latching mechanism. A latching is a positive connection which must be disengaged if the actuating lever is to be moved from its position corresponding to the holding position of the clamping elements.

In concrete terms, the securing mechanism can have a securing lever which is mounted pivotally on the actuating lever and has a long lever arm for manual actuation and a short lever arm for actuating a latching element. Such a securing lever, mounted on the actuating lever, is a simple way of designing such a safety mechanism; at the same time, it enables simple operation, in particular one-handed operation, since the actuation of the safety lever must be carried out as a deliberate movement, but the movement of the actuating lever can take place directly after it has been actuated, without the need to change the grip position.

In a further elaboration, the latching element can have a projection for engagement in a corresponding recess formed on the basic body. In addition, the actuating lever may have an adjusting screw to adjust the swivel range of the safety lever. Such an adjusting screw can be useful if, for example, the engagement position of the detent element changes into a corresponding recess formed on the base body as a result of wear.

For further details of the invention, please refer to the subclaims as well as to the following description of detailed embodiment with reference to the drawing.

In the drawing shows:
- Figure 1: a rear load carrier according to the present invention in a perspective view when mounted on the trailer hitch of a vehicle;
- Figure 2: the rear load carrier of figure 1 in a perspective view with the clamping elements in their insertion position;
- Figure 3: the rear load carrier of figure 1 in a cross-sectional view with the clamping elements in their insertion position;
- Figure 4: the rear load carrier of figure 1 in a cross-sectional view with the clamping elements in an intermediate position;
- Figure 5: the rear load carrier of figure 1 in a cross-sectional view with the clamping elements in their holding position;
- Figure 6: the connection device of the rear load carrier of figure 1 in a detailed cross-sectional view with the clamping elements in the intermediate state;
- Figure 7: the connection device of the rear load carrier of figure 1 in a detailed cross-sectional view with the clamping elements in their holding position.

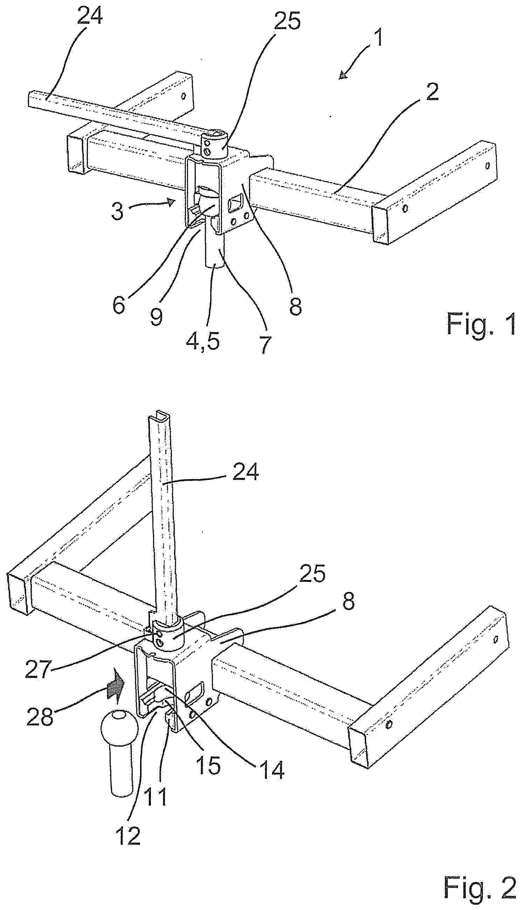

Figure 1 shows a rear load carrier 1 according to the present invention. It has a carrier frame 2, at which a connection device 3 for attachment to a trailer hitch on the vehicle side is arranged at the front. The carrier frame 2 can, for example, be used to carry profile rails to transport bicycles or to carry a box to transport other goods.

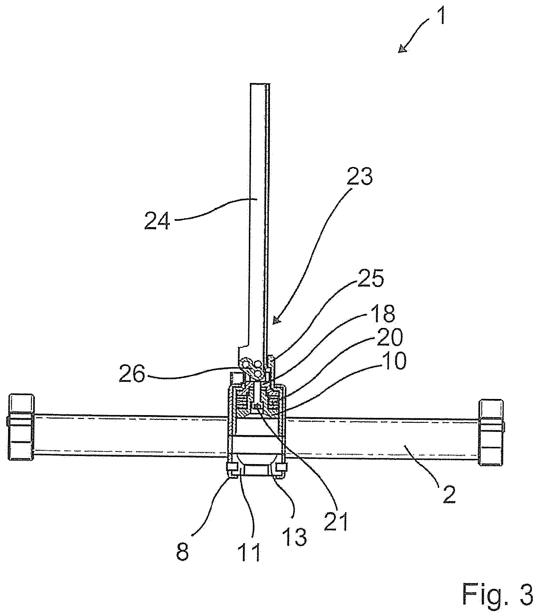

The connection device 3 of the rear load carrier 1 is used for attachment to a trailer hitch 4 on the vehicle side, as shown in figures 3, 4 and 5. The trailer hitch 4 has a connection head 5 with an upper spherical section 6 and a cylindrical neck 7 at the bottom of this section.

At the front end area of the carrier frame 2, a basic body 8 is arranged. Presently, the basic body 8 is composed of two parts 8a, 8b. The first part 8a is manufactured from a metal sheet which was cut and bent. An opening 9 to the bottom and to the front side is provided in the first part 8a to allow the placement of the connection device on the connection head 5. The second part 8b is positioned inside the first part 8a in its upper region.

The connection device 3 further comprises an upper clamping element 10 and a lower clamping element 11 which are arranged one above the other and form between them a receptacle for the connection head 5 of the trailer hitch 4. The clamping elements 10, 11 are displaceable relative to each other between an insertion position, as shown in figures 2 and 3, in which the clamping elements 10, 11 are moved apart in such a way that the connection device 3 can be placed on or removed from the connection head 5, and a holding position, as shown in figures 1, 5 and 7, in which the clamping elements 10, 11 embrace the connection head 5 being located in the receptible in a fixed manner.

The lower clamping element 11 is fixedly connected, presently pinned to the basic body 8. Principally, it is also conceivable that the lower clamping element 11 and the basic body 8 are formed in a one-piece design and not as two separated pieces. For example the basic body 8 could be formed such that the metal sheet is bent in such a way that the shape of the lower clamping element 11 is formed at the bottom of the basic body 8.

To accommodate the connection head 5, the lower clamping element 11 has a recess 12 which passes through it in the vertical direction and is open to the front side of the lower clamping element 11 so that the connection device 3 can be placed on the connection head 5 of a trailer hitch 4 by means of a horizontal relative movement.

In its rear end area, the recess 12 has a contact surface 13. This is designed to come into contact with this spherical section 6 and the neck 7 of the connection head 5 at the bottom side. The contact surface 13 has an upper region 14 corresponding to the spherical section 6 of the connection head 5 and a lower region 15 corresponding to the neck 7. In concrete terms, the upper region 14 is formed as a partial segment of a spherical surface, whereas the lower region 15 is formed as a partial segment of a shell of a circular cylinder.

The upper clamping element 10 has an annular-shaped lay-on surface 16, which is designed to come into contact with the upper half of the spherical section 6 of the connection head 5. In addition, the lay-on surface 16 has a contour corresponding to the spherical section 6, presently corresponding to a section of the spherical surface.

The upper clamping element 10 is mounted slidingly in vertical bore 17 formed in a guiding element 18 serving for receiving and guiding the upper clamping element 10. The guiding element 18 is also mounted slidingly in a vertical bore 19 formed in the basic body 8.

Between the upper clamping element 10 and the guiding element 18, spring means in the form of in total four disk springs 20 arranged in a column are provided. In concrete terms, the disk springs 20 support against a lower contact face 18a of the guiding element 18 and against an upper contact face 10a of the upper clamping element 10. Accordingly, the disk springs 20 arranged at the ends of the column of disk springs are in direct contact with the guiding element 18 and the upper clamping element 10, respectively.

A guiding projection 10b protrudes from the upper contact face 10a of the upper clamping element 10 to engage the inner openings of the disk springs 20 and to avoid an unintended displacement of the disk springs 20.Accordingly, the disk springs 20 are guided by the vertical bore 17 formed in the basic body 8 to the outside and by the guiding projection 10b to the inside.

Furthermore, the guiding projection 10b engages into a deepening 18b of the guiding element 18 in order to align the upper clamping element 10 relative to the guiding element 18.

The disk springs 20 serve to mount the upper clamping element 10 such that it can be displaced resiliently relative to the guiding element 18 against their restoring force. To preload the disk springs 20, the connection device 3 further comprises mechanical stop means, presently in the form of a hexagon socket screw 21. This screw 21 is screwed into the guiding element 18 against the restoring force of the disk springs 20 and permeates through the upper clamping element 10. In consequence, the upper clamping element 10 can be preloaded adjustably against the restoring force of the disk springs 20. Furthermore, the screw 21 being in contact with corresponding abutment surface 22 of the upper clamping element 10 limits the mobility of the upper clamping element 10 relative to the guiding element 18.

The connection device 3 also has an actuating device 23. This is coupled to the clamping elements 10, 11 in order to move them relative to each other between their insertion position and their holding position. In concrete terms, the guiding element 18 can be moved vertically relative to the basic body 8 by the actuating device 23. For this purpose, the actuating device 23 has an actuating lever 24 which is mounted on a projection 25 projecting upwards from the basic body 8. The actuating lever 24 is connected to the guiding element 18 via an intermediate lever 26 in such a way that a pivoting movement of the actuating lever 24 is converted into a translational movement of the guiding element 18 in a vertical direction. The actuating lever 24 and the intermediate lever 26 are designed as a toggle lever mechanism.

The pivotal or articulated mounting of the actuating lever 24 on the basic body 8, of the actuating lever 24 with the intermediate lever 26 and of the guiding element 18 with the intermediate lever 26 is concretely achieved by means of swivel bolts 27 oriented parallel to each other.

The actuating lever 24 has a long lever arm for actuation and a short lever arm for articulated connection with the intermediate lever 26 starting from its swivel axis on the basic body 8. As it can be seen in particular in figures 3, 4 and 5, the long and short lever arms of the actuating lever 24 include an angle of 90°. The effective length of the intermediate lever 26 and the effective length of the short lever arm of the actuating lever 24 are in a ratio of approximately 1.4.

If the rear load carrier 1 is to be attached to the connection head 5 of a trailer hitch 4 by means of the connection device 3, the latter is placed on the connection head 5 in the position shown in Figure 2 by a horizontal movement of the connection device 3 relative to the trailer hitch 4, as indicated by arrow 28. In this way, the connection device 3 is placed on the connection head 5.

In the insertion position shown in Figure 3, the guiding element 18 is in an upper end position, with the actuating lever 24 extending substantially in a vertical direction.

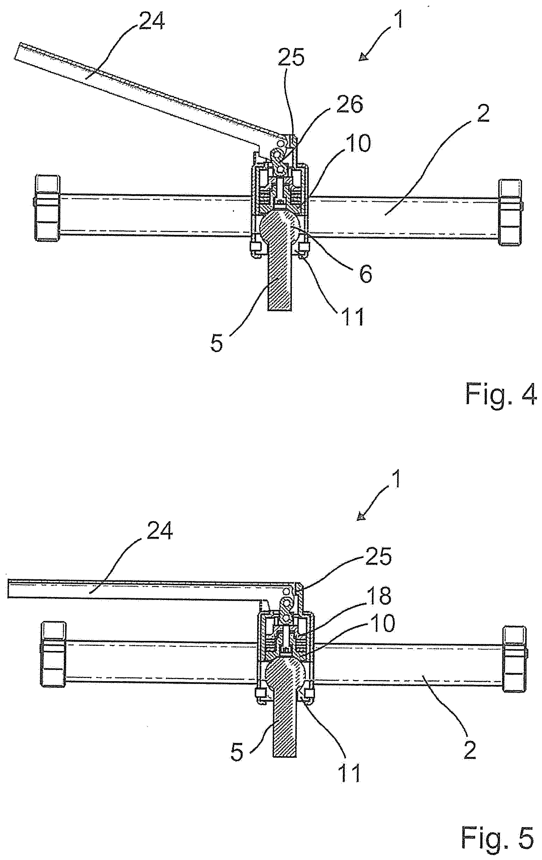

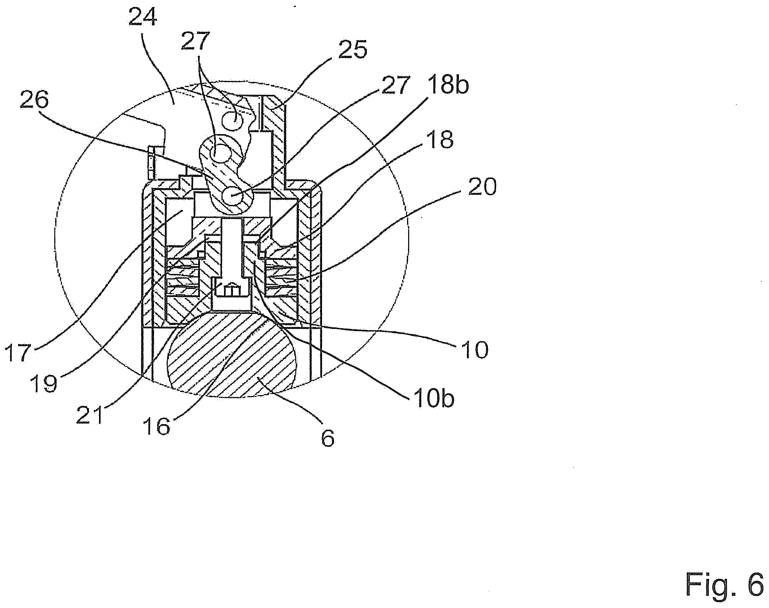

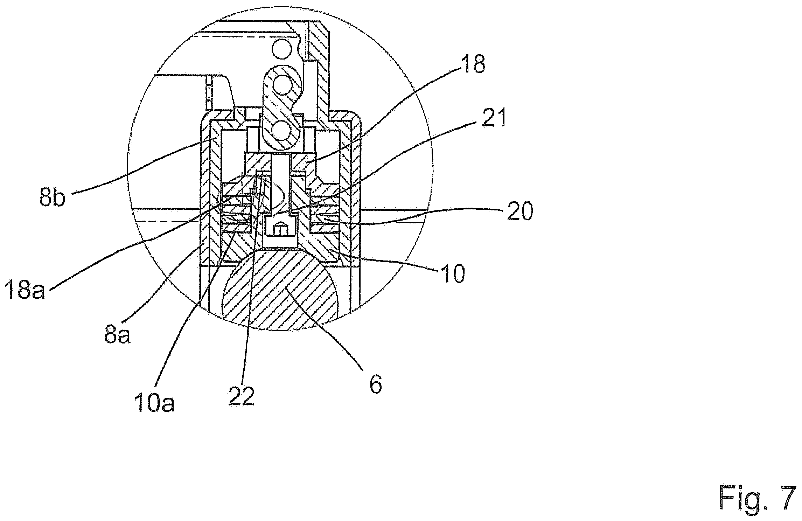

After being placed on the connection head 5 of a trailer hitch 4, the actuating lever 24 is moved subsequently from its vertical direction to a horizontal direction corresponding to the holding position by manual operation, as subsequently shown in Figures 4 and 5, in detail in Figures 6 and 7. This causes the guiding element 18 and in consequence the upper clamping element 10 connected thereto to be moved towards the lower clamping element 11, until the connection head 5 comes into contact with the lower clamping element 11, as shown in Figure 4 and Figure 6. Absolutely spoken, the rear load carrier 1 is lifted with regard to the trailer hitch 4. A further movement of the actuating lever 24 leads to a movement of the guiding element 18 towards the upper clamping element 10 and in consequence to an increase of the force generated by the disc springs 20 as they are compressed, as it is visible in Figure 7 compared to Figure 6. Thus, the connection head 5 is braced between the upper clamping element 10 and the lower clamping element 11 against the spring force generated by the disk springs 20. The contact surface 13 formed in the lower clamping element 11 supports the rear load carrier 1 against the lower area of the spherical section 11 and against the neck 12 of the lower area of the spherical section 6 and against the neck 7 of the connection head 5.

### REFERENCE CHARACTER LIST

- 1: Rear load carrier
- 2: Carrier frame
- 3: Connection device
- 4: Trailer hitch
- 5: Connection head
- 6: Spherical section
- 7: Cylindrical neck
- 8: Basic body
- 9: Opening
- 10: Upper clamping element
- 10a: Upper contact face
- 10b: Guiding projection
- 11: Lower clamping element
- 12: Recess
- 13: Contact surface
- 14: Upper region
- 15: Lower region
- 16: Lay-on surface
- 17: Vertical bore
- 18: Guiding element
- 18a: Lower contact face
- 18b: Deepening
- 19: Vertical bore
- 20: Disk spring
- 21: Hexagon socket screw
- 22: Abutment surface
- 23: Actuating device
- 24: Actuating lever
- 25: Projection
- 26: Intermediate lever
- 27: Swivel bolt
- 28: Arrow

## Claims

1. Rear load carrier (1) for mounting on a motor vehicle
having a carrier frame (2) which has a connection device (3) for fastening to a trailer hitch (4) on the vehicle side, the connection device (3) comprising
a basic body (8),
an upper and a lower clamping element (10, 11), which are arranged one above the other, form between them a receptacle for a connection head (5) of the trailer hitch (4) and are displaceable relative to one another, and
an actuating device (23) which is coupled to the clamping elements (10, 11) in order to displace them relative to one another between an insertion position, in which the clamping elements (10, 11) are moved apart in such a way that the connection device (3) can be placed on or removed from the connection head (5), and a holding position, in which the clamping elements (10, 11) embrace a connection head (5) which is located in the receptacle in a fixed manner,
**wherein** the connection device (3) further comprises a guiding element (18) for receiving and guiding the upper clamping element (10), the guiding element (18) being coupled to the actuating device (23) such that it can be displaced towards or away from the lower clamping element (11), in particular vertically, and wherein spring means (20) are provided between the upper clamping element (10) and the guiding element (18) in order to mount the upper clamping element (10) such that it can be displaced resiliently relative to the guiding element (18) against the restoring force of the spring means (20), **characterized in that** the spring means (20) support against a contact face (18a) of the guiding element (18) and against a contact face (10a) of the upper clamping element (10)

2. Rear load carrier (1) according to claim 1, **characterized in that** the guiding element (18) is mounted slidingly in a vertical bore (19) formed in the basic body (8), and/or **that** the upper clamping element (10) is mounted slidingly in a vertical bore (17) formed in the guiding element (18).

3. Rear load carrier (1) according to any of the preceding claims, **characterized in that** the connection device (3) further comprises mechanical stop means, by means of which the mobility of the upper clamping element (10) relative to the guiding element (18) is limited and by means of which the upper clamping element (10) can be preloaded against the restoring force of the spring means (20), wherein, in particular, the mechanical stop means comprise a screw, in particular a hexagon socket screw (21), which is screwed into the guiding element (18) against restoring the force of the spring means (20) and permeates through the upper clamping element (10) so that the upper clamping element (10) can be preloaded adjustably against the restoring force of the spring means (20), and, preferably, wherein the screw head is in contact with a corresponding abutment surface (22) of the upper clamping element (10).

4. Rear load carrier (1) according to any of the preceding claims, **characterized in that** the spring means (20) comprise at least one disk spring, wherein, in particular, the spring means (20) comprise a plurality of disk springs, in particular exactly 4 disk springs, which preferably are arranged as a column one upon the other.

5. Rear load carrier (1) according to any of the preceding claims, **characterized in that** the upper clamping element (10) has a lay-on surface (16) which is designed to come into contact with the spherical section (6) of a connection head (5) of a trailer hitch (4), in particular with the upper half of the spherical section (6).

6. Rear load carrier (1) according to claim 5, **characterized in that** the lay-on surface (16) has a contour corresponding to the spherical section (6) of the connection head (5) of a trailer hitch (4), wherein, in particular, the lay-on surface (16) is of annular design.

7. Rear load carrier (1) according to any of the preceding claims, **characterized in that** the lower clamping element (11) is fixedly connected to the basic body (8), in particular screwed to or pinned to the basic body.

8. Rear load carrier (1) according to any of the preceding claims, **characterized in that** the lower clamping element (11) has a recess (12), which passes through it in the vertical direction, for receiving the connection head (5) of a trailer hitch (4).

9. Rear load carrier (1) according to claim 8, **characterized in that** the recess (12) is open towards the front side of the lower clamping element (11) in order to be able to place the connection device (3) on the connection head (5) of a trailer hitch (4), in particular by means of a horizontal relative movement.

10. Rear load carrier (1) according to claim 9, **characterized in that** the recess formed in the lower clamping element (11) has in its rear end region a contact surface (13) which is designed to come into contact with the spherical section (6) of the connection head (5) and/or with the neck (7) of a trailer hitch (4) adjoining the spherical section (6) on the bottom side, wherein, in particular, the contact surface (13) has a region (14) corresponding to the spherical section (6) of the connection head (5) of a trailer hitch (4).

11. Rear load carrier (1) according to claim 10, **characterized in that** the contact surface has a region (15) corresponding to the neck (7) of a trailer hitch (4).

12. Rear load carrier (1) according to one of the preceding claims, **characterized in that** the actuating device (23) has an actuating lever (24) which is pivotably mounted on the basic body (8) and is connected to the guiding element (18) via an intermediate lever (26) in such a way that a pivoting movement of the actuating lever (24) is converted into a translational movement of the guiding element (18) in a vertical direction, wherein, in particular, the actuating lever (24) and the intermediate lever (26) are formed as a toggle lever mechanism.

13. Rear load carrier (1) according to claim 12, **characterized in that** the actuating lever (24) is mounted on a projection (25) projecting upwards from the basic body (8).

14. Rear load carrier (1) according to one of claims 12 or 13, **characterized in that** the actuating lever (24), starting from its pivot axis on the basic body (8), comprises a long lever arm for manual actuation and a short lever arm for articulated connection to the intermediate lever (26), wherein, in particular, the long lever arm and the short lever arm of the actuating lever (24) form an angle of at least 70°, in particular of at least 80°, and of at most 110°, in particular of at most 100°, preferably an angle of 90°.

15. Rear load carrier (1) according to one of claims 12 to 14, **characterized in that** the intermediate lever (26) is hingedly connected to the guiding element (18), and/or **that** the effective length of the intermediate lever (26) and the effective length of the short lever arm of the actuating lever (24) are in a ratio between 0.8 and 1.5.

## Patentansprüche

1. Hecklastenträger (1) zur Montage an einem Kraftfahrzeug
mit einem Trägerrahmen (2), der eine Verbindungseinrichtung (3) zur Befestigung an einer fahrzeugseitigen Anhängerkupplung (4) aufweist, wobei die Verbindungseinrichtung (3)
einen Grundkörper (8),
ein oberes und ein unteres Klemmelement (10, 11), die übereinander angeordnet sind, zwischen sich eine Aufnahme für einen Anschlusskopf (5) der Anhängerkupplung (4) bilden und relativ zueinander verschiebbar sind und,
eine Betätigungseinrichtung (23) umfasst, die mit den Klemmelementen (10, 11) gekoppelt ist, um diese relativ zueinander zwischen einer Einschubposition, in der die Klemmelemente (10, 11) derart auseinander bewegt sind, dass die Verbindungseinrichtung (3) auf den Anschlusskopf (5) aufgesetzt oder von diesem entfernt werden kann, und einer Halteposition, in der die Klemmelemente (10, 11) ein in der Aufnahme befindlichen Anschlusskopf (5) fest umschließen, zu verschieben,
wobei die Verbindungseinrichtung (3) ferner ein Führungselement (18) zur Aufnahme und Führung des oberen Klemmelements (10) aufweist, wobei das Führungselement (18) mit der Betätigungseinrichtung (23) derart gekoppelt ist, dass es auf das untere Klemmelement (11) zu oder von diesem weg, insbesondere vertikal, verschiebbar ist und wobei zwischen dem oberen Klemmelement (10) und dem Führungselement (18) Federmittel (20) vorgesehen sind, um das obere Klemmelement (10) gegen die Rückstellkraft der Federmittel (20) relativ zum Führungselement (18) federnd verschieben zu können, **dadurch gekennzeichnet, dass** sich die Federmittel (20) gegen eine Anlagefläche (18a) des Führungselementes (18) und gegen eine Anlagefläche (10a) des oberen Klemmelements (10) stützen.

2. Hecklastenträger (1) nach Anspruch 1, **dadurch gekennzeichnet, dass** das Führungselement (18) in einer im Grundkörper (8) ausgebildeten vertikalen Bohrung (19) verschiebbar gelagert ist, und/oder dass das obere Klemmelement (10) in einer in Führungselement (18) ausgebildeten vertikalen Bohrung (17) verschiebbar gelagert ist.

3. Hecklastenträger (1) nach einem der vorherigen Ansprüche, **dadurch gekennzeichnet, dass** die Verbindungseinrichtung (3) ferner mechanische Anschlagmittel aufweist, durch die die Beweglichkeit des oberen Klemmelements (10) relativ zum Führungselement (18) begrenzt wird und durch die das obere Klemmelement (10) gegen die Rückstellkraft der Federmittel (20) vorspannbar ist, wobei die mechanischen Anschlagmittel insbesondere eine Schraube umfassen, insbesondere eine Innensechskantschraube (21), die gegen die Rückstellkraft des Federmittels (20) in das Führungselement (18) eingeschraubt ist und das obere Klemmelement (10) durchdringt, so dass das obere Klemmelement (10) gegen die Rückstellkraft des Federmittels (20) einstellbar vorspannbar ist, und wobei bevorzugt der Schraubenkopf mit einer entsprechenden Anlagefläche (22) des oberen Klemmelements (10) in Kontakt steht.

4. Hecklastenträger (1) nach einem der vorherigen Ansprüche, **dadurch gekennzeichnet, dass** die Federmittel (20) mindestens eine Tellerfeder umfassen, wobei, insbesondere, die Federmittel (20) mehrere Tellerfedern, insbesondere genau vier Tellerfedern, umfassen, die vorzugsweise säulenartig übereinander angeordnet sind.

5. Hecklastenträger (1) nach einem der vorherigen Ansprüche, **dadurch gekennzeichnet, dass** das obere Klemmelement (10) eine Auflagefläche (16) aufweist, welche ausgebildet ist, mit dem Kugelabschnitt (6) eines Anschlusskopfes (5) einer Anhängerkupplung (4) in Kontakt zu kommen, insbesondere mit der oberen Hälfte des Kugelabschnitts (6) in Kontakt zu kommen.

6. Hecklastenträger (1) nach Anspruch 5, **dadurch gekennzeichnet, dass** die Auflagefläche (16) eine dem Kugelabschnitt (6) des Anschlusskopfes (5) einer Anhängerkupplung (4) entsprechende Kontur aufweist, wobei insbesondere die Auflagefläche (16) ringförmig ausgebildet ist.

7. Hecklastenträger (1) nach einem der vorherigen Ansprüche, **dadurch gekennzeichnet, dass** das untere Klemmelement (11) fest mit dem Grundkörper (8) verbunden, insbesondere mit dem Grundkörper verschraubt oder verstiftet ist.

8. Hecklastenträger (1) nach einem der vorherigen Ansprüche, **dadurch gekennzeichnet, dass** das untere Klemmelement (11) eine dieses in vertikaler Richtung durchsetzende Ausnehmung (12) zur Aufnahme des Anschlusskopfes (5) einer Anhängerkupplung (4) aufweist.

9. Hecklastenträger (1) nach Anspruch 8, **dadurch gekennzeichnet, dass** die Ausnehmung (12) zur Vorderseite des untere Klemmelements (11) hin offen ist, um die Anschlusseinrichtung (3) auf den Anschlusskopf (5) einer Anhängerkupplung (4), insbesondere mittels einer horizontalen Relativbewegung, aufsetzen zu können.

10. Hecklastenträger (1) nach Anspruch 9, **dadurch gekennzeichnet, dass** die im unteren Klemmelement (11) ausgebildete Ausnehmung in ihrem hinteren Endbereich eine Kontaktfläche (13) aufweist, die dazu ausgebildet ist, mit dem Kugelabschnitt des Anschlusskopfes (5) und/oder mit dem an dem Kugelabschnitt (6) bodenseitig anschließenden Hals (7) einer Anhängerkupplung (4) in Kontakt zu kommen, wobei, insbesondere, die Kontaktfläche (13) einen Bereich (14) aufweist, der dem kugelförmigen Anschnitt (6) des Anschlusskopfes (5) eine Anhängerkupplung (4) entspricht.

11. Hecklastenträger (1) nach Anspruch 10, **dadurch gekennzeichnet, dass** die Kontaktfläche einen Bereich (15) aufweist, der dem Hals (7) einer Anhängerkupplung (4) entspricht.

12. Hecklastenträger (1) nach einem der vorherigen Ansprüche, **dadurch gekennzeichnet, dass** die Betätigungseinrichtung (23) einen am Grundkörper (8) schwenkbar gelagerten Betätigungshebel (24) aufweist, der über einen Zwischenhebel (26) mit dem Führungselement (18) derart verbunden ist, dass eine Schwenkbewegung des Betätigungshebels (24) in eine translatorische Bewegung des Führungselementes (18) in vertikaler Richtung umgesetzt wird, wobei, insbesondere, der Betätigungshebel (24) und der Zwischenhebel (26) als Kniehebelmechanismus ausgebildet sind.

13. Hecklastenträger (1) nach Anspruch 12, **dadurch gekennzeichnet, dass** der Betätigungshebel (24) an einem von dem Grundkörper (8) nach oben ragenden Vorsprung (25) gelagert ist.

14. Hecklastenträger (1) nach einem der Ansprüche 12 oder 13, **dadurch gekennzeichnet, dass** der Betätigungshebel (24), ausgehend von seiner Schwenkachse am Grundkörper (8), einen langen Hebelarm zur manuellen Betätigung und einen kurzen Hebelarm zur gelenkigen Verbindung mit dem Zwischenhebel (26) aufweist, wobei, insbesondere, der lange Hebelarm und der kurze Hebelarm des Betätigungshebels (24) einen Winkel von mindestens 70°, insbesondere von mindestens 80°, und von höchstens 110°, insbesondere von höchstens 100°, vorzugsweise einen Winkel von 90°, bilden.

15. Hecklastenträger (1) nach einem der Ansprüche 12 bis 14, **dadurch gekennzeichnet, dass** der Zwischenhebel (26) gelenkig mit dem Führungselement (18) verbunden, und/oder dass die wirksame Länge des Zwischenhebels (26) und die wirksame Länge des kurzen Hebelarms des Betätigungshebels (24) in einem Verhältnis zwischen 0,8 und 1,5 stehen.

## Revendications

1. Porte-charge arrière (1) destiné à être monté sur un véhicule automobile
avec un cadre de support (2) qui présente un dispositif de connexion (3) pour la fixation à un attelage de remorque (4) côté véhicule, le dispositif de connexion (3) comprenant
un corps de base (8),
un élément de serrage supérieur et un élément de serrage inférieur (10, 11), qui sont disposés l'un au-dessus de l'autre, forment entre eux un logement pour une tête de connexion (5) de l'attelage de remorque (4) et sont déplaçables l'un par rapport à l'autre, et
un dispositif d'actionnement (23) qui est couplé aux éléments de serrage (10, 11) afin de les déplacer l'un par rapport à l'autre entre une position d'insertion, dans laquelle les éléments de serrage (10, 11) sont écartés l'un de l'autre de telle sorte que le dispositif de connexion (3) peut être placé sur la tête de connexion (5) ou en être retiré, et une position de maintien, dans laquelle les éléments de serrage (10, 11) entourent de manière fixe une tête de connexion (5) qui se trouve dans le logement,
le dispositif de connexion (3) comprenant en outre un élément de guidage (18) destiné à recevoir et à guider l'élément de serrage supérieur (10), l'élément de guidage (18) étant couplé au dispositif d'actionnement (23) de manière à pouvoir être déplacé vers ou à l'écart de l'élément de serrage inférieur (11), en particulier verticalement, et des moyens de ressort (20) étant prévus entre l'élément de serrage supérieur (10) et l'élément de guidage (18) afin de monter l'élément de serrage supérieur (10) de sorte qu'il puisse être déplacé de manière élastique par rapport à l'élément de guidage (18) contre la force de rappel des moyens de ressort (20), **caractérisé en ce que** les moyens de ressort (20) s'appuient contre une face de contact (18a) de l'élément de guidage (18) et contre une face de contact (10a) de l'élément de serrage supérieur (10).

2. Porte-charge arrière (1) selon la revendication 1, **caractérisé en ce que** l'élément de guidage (18) est monté coulissant dans un alésage vertical (19) formé dans le corps de base (8), et/ou **en ce que** l'élément de serrage supérieur (10) est monté coulissant dans un alésage vertical (17) formé dans l'élément de guidage (18).

3. Porte-charge arrière (1) selon l'une des revendications précédentes, **caractérisé en ce que** le dispositif de connexion (3) comprend en outre des moyens de butée mécaniques, au moyen desquels la mobilité de l'élément de serrage supérieur (10) par rapport à l'élément de guidage (18) est limitée et au moyen desquels l'élément de serrage supérieur (10) peut être précontraint à l'encontre de la force de rappel des moyens de ressort (20), les moyens de butée mécaniques comprenant en particulier une vis, en particulier une vis à six pans creux (21), qui est vissée dans l'élément de guidage (18) à l'encontre de la force de rappel du moyen de ressort (20) et traverse l'élément de serrage supérieur (10), de sorte que l'élément de serrage supérieur (10) peut être préchargé de manière réglable à l'encontre de la force de rappel du moyen de ressort (20), et, de préférence, la tête de la vis étant en contact avec une surface de butée correspondante (22) de l'élément de serrage supérieur (10).

4. Porte-charge arrière (1) selon l'une des revendications précédentes, **caractérisé en ce que** les moyens de ressort (20) comprennent au moins un ressort à disque, les moyens de ressort (20) comprenant en particulier une pluralité de ressorts à disque, notamment exactement 4 ressorts à disque, qui sont de préférence disposés en colonne les uns au-dessus des autres.

5. Porte-charge arrière (1) selon l'une des revendications précédentes, **caractérisé en ce que** l'élément de serrage supérieur (10) présente une surface de pose (16) qui est conçue pour venir en contact avec la section sphérique (6) d'une tête de connexion (5) d'un attelage de remorque (4), en particulier avec la moitié supérieure de la section sphérique (6).

6. Porte-charge arrière (1) selon la revendication 5, **caractérisé en ce que** la surface de pose (16) présente un contour correspondant à la section sphérique (6) de la tête de connexion (5) d'un attelage de remorque (4), la surface de pose (16) en particulier étant de forme annulaire.

7. Porte-charge arrière (1) selon l'une des revendications précédentes, **caractérisé en ce que** l'élément de serrage inférieur (11) est relié fixement au corps de base (8), en particulier vissé ou goupillé au corps de base.

8. Porte-charge arrière (1) selon l'une des revendications précédentes, **caractérisé en ce que** l'élément de serrage inférieur (11) présente un évidement (12), qui le traverse dans le sens vertical, pour recevoir la tête de connexion (5) d'un attelage de remorque (4).

9. Porte-charge arrière (1) selon la revendication 8, **caractérisé en ce que** l'évidement (12) est ouvert vers la face avant de l'élément de serrage inférieur (11) afin de pouvoir placer le dispositif de connexion (3) sur la tête de connexion (5) d'un attelage de remorque (4), en particulier par un mouvement relatif horizontal.

10. Porte-charge arrière (1) selon la revendication 9, **caractérisé en ce que** l'évidement formé dans l'élément de serrage inférieur (11) présente dans sa zone d'extrémité arrière une surface de contact (13) qui est conçue pour venir en contact avec la section sphérique (6) de la tête de connexion (5) et/ou avec le col (7) d'un attelage de remorque (4) se raccordant à la section sphérique (6) sur le côté inférieur, la surface de contact (13) en particulier présentant une zone (14) correspondant à la section sphérique (6) de la tête de connexion (5) d'un attelage de remorque (4).

11. Porte-charge arrière (1) selon la revendication 10, **caractérisé en ce que** la surface de contact présente une région (15) correspondant au col (7) d'un attelage de remorque (4).

12. Porte-charge arrière (1) selon l'une des revendications précédentes, **caractérisé en ce que** le dispositif d'actionnement (23) présente un levier d'actionnement (24) qui est monté de manière pivotante sur le corps de base (8) et qui est relié à l'élément de guidage (18) par un levier intermédiaire (26) de telle sorte qu'un mouvement de pivotement du levier d'actionnement (24) est converti en un mouvement de translation de l'élément de guidage (18) dans une direction verticale, le levier d'actionnement (24) et le levier intermédiaire (26) en particulier étant réalisés sous la forme d'un mécanisme à genouillère.

13. Porte-charge arrière (1) selon la revendication 12, **caractérisé en ce que** le levier d'actionnement (24) est monté sur une saillie (25) dépassant vers le haut du corps de base (8).

14. Porte-charge arrière (1) selon l'une des revendications 12 ou 13, **caractérisé en ce que** le levier d'actionnement (24), en partant de son axe de pivotement sur le corps de base (8), comprend un bras de levier long pour l'actionnement manuel et un bras de levier court pour la liaison articulée avec le levier intermédiaire (26), le bras de levier long et le bras de levier court du levier d'actionnement (24) en particulier formant un angle d'au moins 70°, en particulier d'au moins 80°, et d'au plus 110°, en particulier d'au plus 100°, de préférence un angle de 90°.

15. Porte-charge arrière (1) selon l'une des revendications 12 à 14, **caractérisé en ce que** le levier intermédiaire (26) est relié de manière articulée à l'élément de guidage (18), et/ou **en ce que** la longueur effective du levier intermédiaire (26) et la longueur effective du bras de levier court du levier d'actionnement (24) sont dans un rapport compris entre 0,8 et 1,5.
